# EUROPEAN PATENT APPLICATION

(11) **EP 1 973 117 A1**
(43) Date of publication of application: **24.09.2008**
(21) Application number: 07104839.1
(22) Date of filing: 23.03.2007
(51) Int. Cl.: G11B 33/12, G06F 1/26

(54) **Multi media module**

(71) Applicant: Jigatek Corporation, Taipei City 114 (TW)
(72) Inventor: Kao, Chia-Hung, 114 Taipei City (TW); Han, Jeen-An, 221 Taipei County (TW)
(74) Representative: Beck, Michael Rudolf

(57) **Abstract**

A multimedia module in a switch case comprises a panel (1) to be located on a wall surface (5), said panel having at least one hole (11), a power source (2) located between said panel (1) and said wall surface (5), a transformer (3) connecting to said power source (2), and an electronic device (4) arranged in said hole (11) of said panel (1), said electronic device (4) having a connection hole (40) to connect to said transformer (3). The multimedia module provides great variety and flexibility.

## Description

### Field of the invention

The present invention relates to a multimedia module and more specifically to setting an electronic device, comprising one electronic component or a plurality of electronic components, in a panel of a switch case to obtain variety and flexibility of use.

### Description of the Related Art

A case for a switch is generally covered with a panel to decorate a supporting plate of the switch case lest the supporting plate appears to the outside and influences the outside look of the switch case. And the switch is connected with an outside electric equipment to supply power for it.

Although the switch supplies power for an electric equipment, it is the only function to be a switch for the electric equipment connecting to the switch and the electric equipment must be fixed on a wall. Therefore, although switches are so widely used, the switches in use still lack variety and flexibility.

### Summary of the invention

The object of the present invention is to provide a multi media module with variety and flexibility in use.

To achieve the above object, the present invention provides a multi media module according to claim 1.

Advantageous embodiments are laid down in further claims.

The multimedia module arranged in a switch case comprises a panel having at least one hole and being set on a wall surface; a power source being set between the panel and the wall surface; a transformer connecting to the power source; and an electronic device having a connection hole to connect to the transformer and being located in the hole of the panel.

### Brief descriptions of the drawings

The present invention will be better understood from the following detailed description of an embodiment according to the present invention, taken in conjunction with the accompanying drawings, in which
FIG.1 to FIG.3 are a perspective view, an exploded view and a block view showing the preferred embodiment according to the present invention;
FIG.4 to FIG.8 are views showing the preferred embodiments of the electronic device
FIG.9 and FIG.10 are a perspective view and a flow view showing the first state of use of the preferred embodiment of the present invention; and
FIG.11 and FIG.12 are a perspective view and a flow view showing the second state of use of the preferred embodiment of the present invention.

### Description of an embodiment

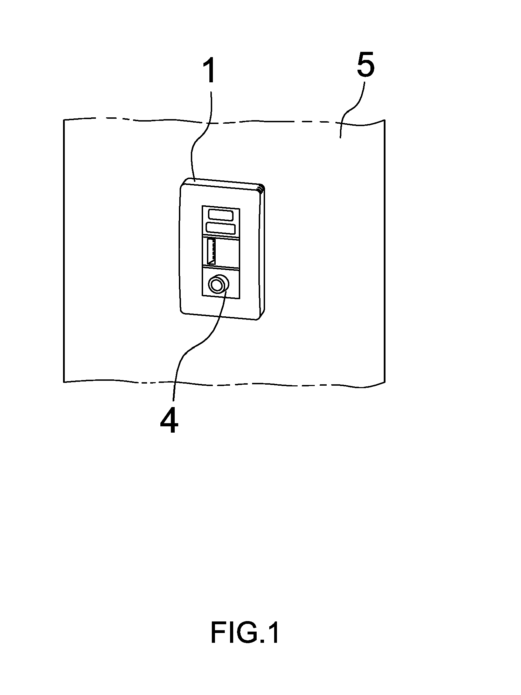

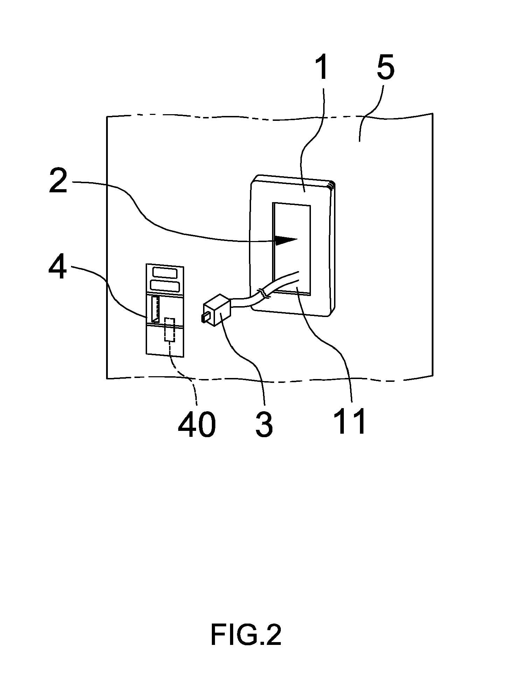

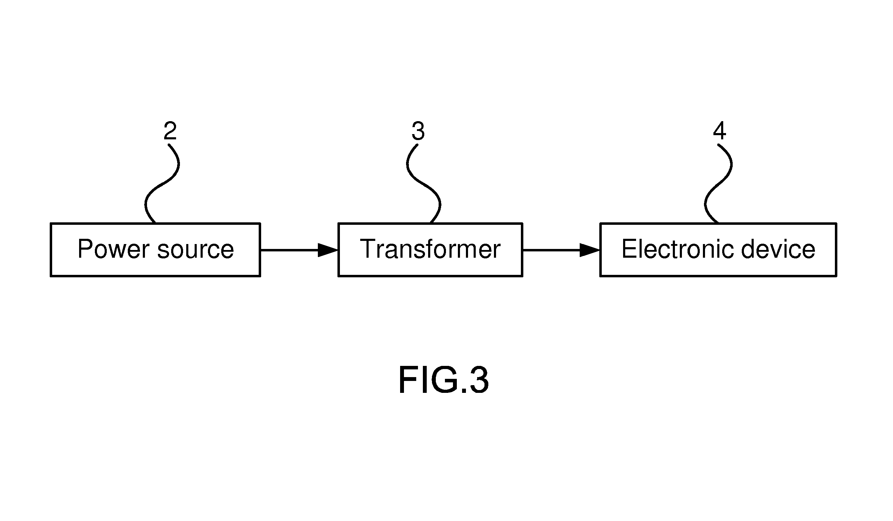

FIG.1 to FIG.3 show a perspective view, an exploded view and a block view showing a preferred embodiment according to the present invention. As shown in the figures, the present invention is a multimedia module in a switch case, comprising a panel 1 , a power source 2, a transformer 3 and an electronic device 4, where the electronic device 4 comprising one electronic component or a plurality of electronic components is set in the panel 1 of a switch case to obtain variety and flexibility.

The panel 1 is set at a proper place on a wall surface 5 and has at least one hole 11.

The power source 2 provides an alternating current having a voltage between 110 volts and 220 volts. The power source 2 is set between the panel 1 and the wall surface 5.

The transformer 3 is connected with the power source 2 to transform alternating current into direct current.

The electronic device 4 is set in the hole 11 of the panel 1; and the electronic device 4 has a connection hole 40 connected with the transformer 3 so that an electrical power are supplied from the power source 2 through the transformer 3 to the electronic device 4. Thus, a novel multimedia module in a switch case is obtained.

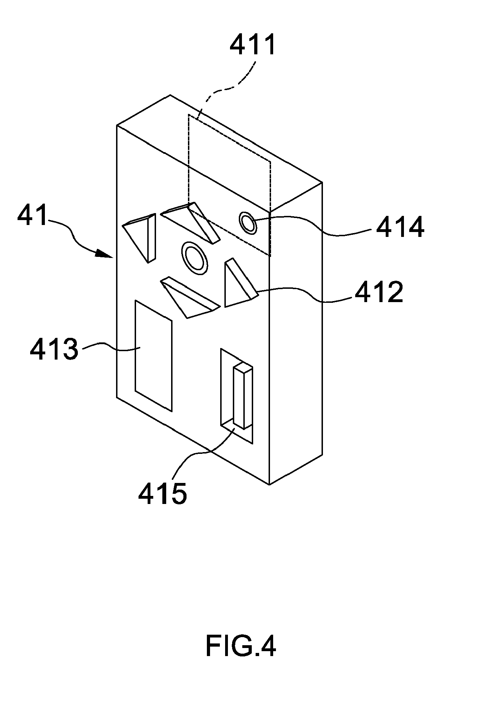

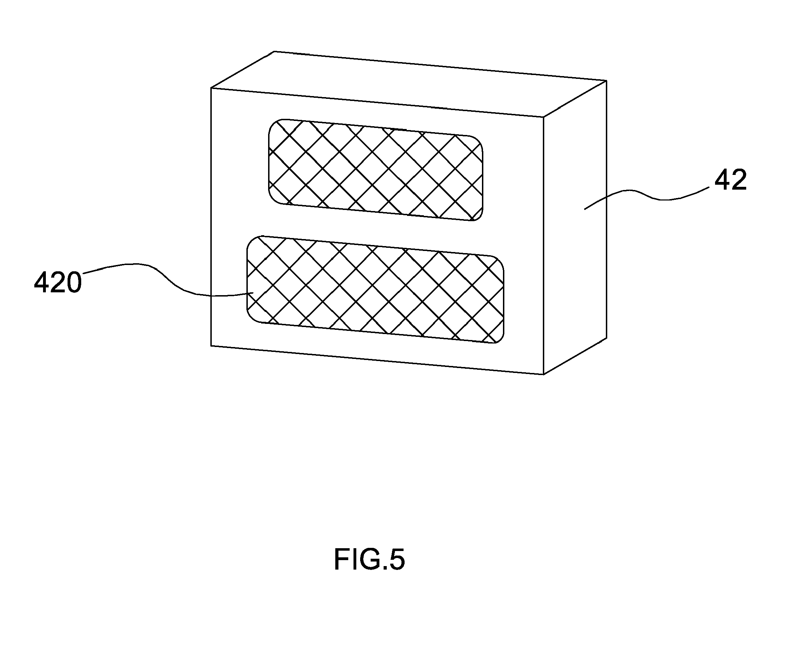

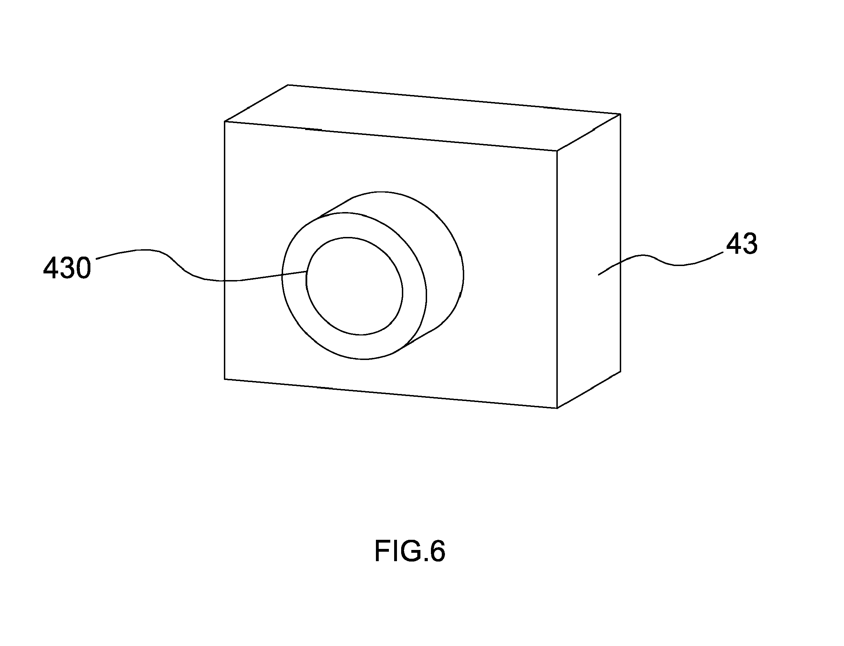

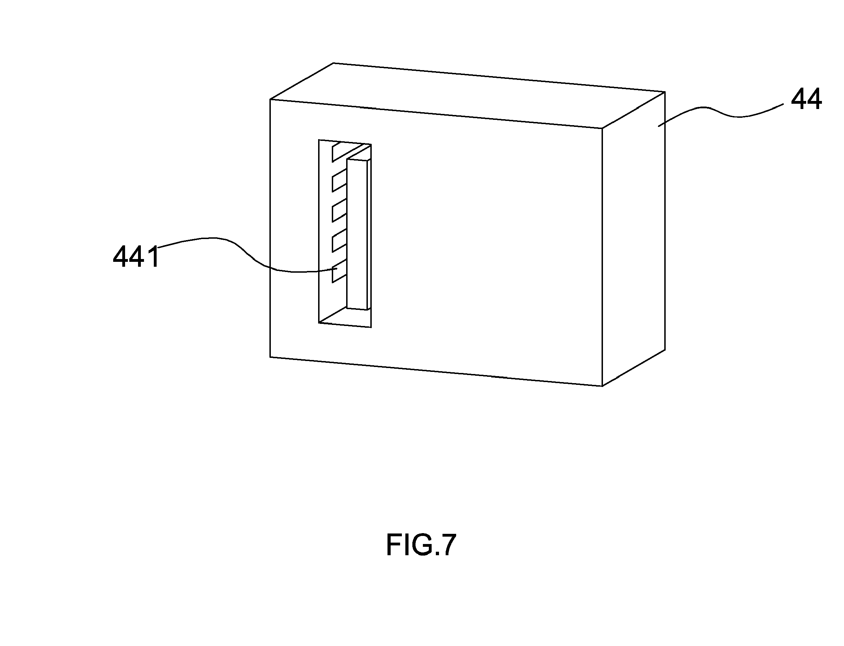

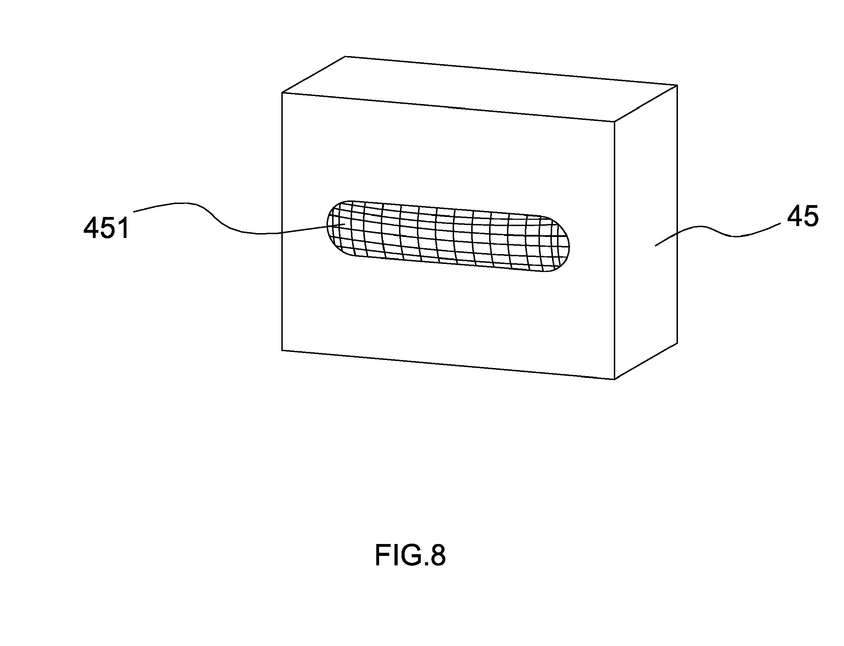

Please refer to FIG.4 to FIG.8, which are views showing preferred embodiments of the electronic device. As shown in the figures, the electronic device is an MP3 module 41 comprising a storage unit 411, a control unit 412, a display unit 413, an output unit 414, and a connection unit 415; or is an audio recording device 42 having an audio recorder 421; or is a video recording device 43 having a video recorder 431 ; or is a storage device 44 to be inserted with a memory card 441; or is an antenna device 45 having a wireless transmission unit 451; or is a combination of several or all of the above electronic devices.

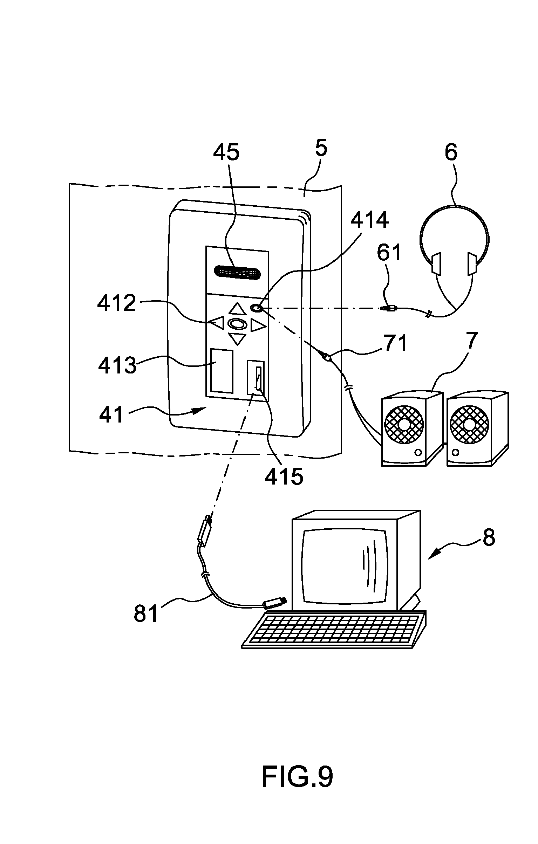

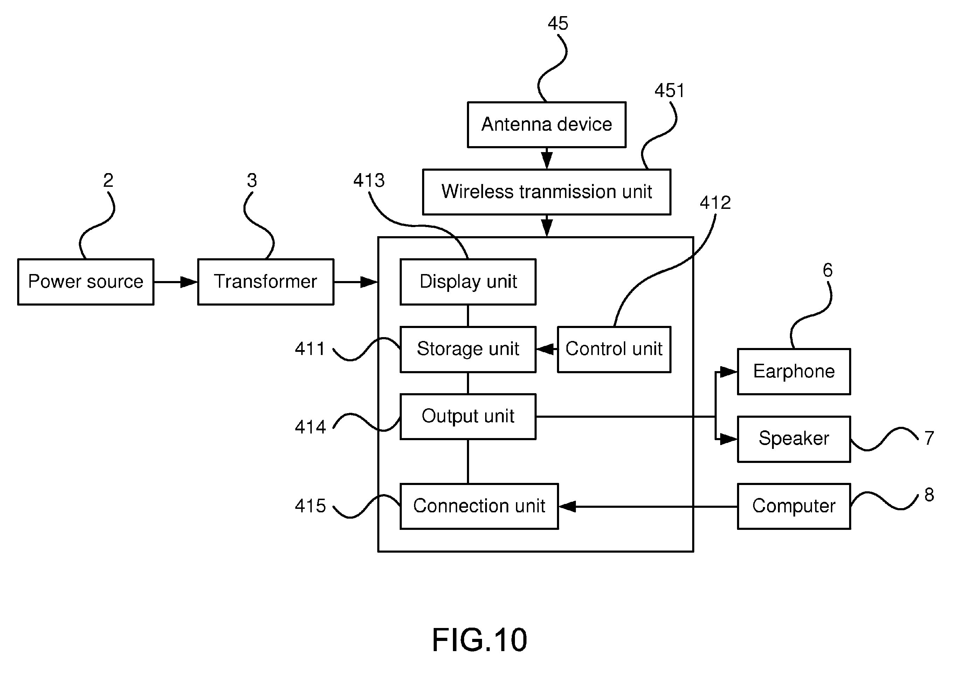

Please refer to FIG.9 and FIG.10, which are a perspective view and a flow view showing the first state of use of the preferred embodiment of the present invention. As shown in the figure, the present invention has an electronic device 4 of an MP3 module 41. The MP3 module 41 is connected with a transformer 3 to acquire power from a power source 2; and the MP3 module 41 is set in a hole 11 of a panel 1 on a wall surface 5. Thus, the MP3 module 41 is assembled.

In the first state of use, the user plugs a connector 61 , 71 of an earphone 6 or a speaker 7 into an output unit 414 of the MP3 module 41. Then a control unit 412 start playing an audio file in a storage unit 411 ; and the audio file is sent through the output unit 414 to be outputted by the earphone 6 or the speaker 7, where a title for a song of the audio file is displayed on a display unit 413. In this way, the user hears the song of the audio file from the MP3 module 41. Or, the MP3 module 41 is connected with the computer 8 (or other portable or non-portable electronic device) through a connection unit 415 by using a transmission wire 81 to download and/or upload audio files from and/or to the computer 8. Or, the MP3 module 41 is coordinated with an antenna device 45 to download and/or upload audio files wirelessly by using a wireless transmission unit 451.

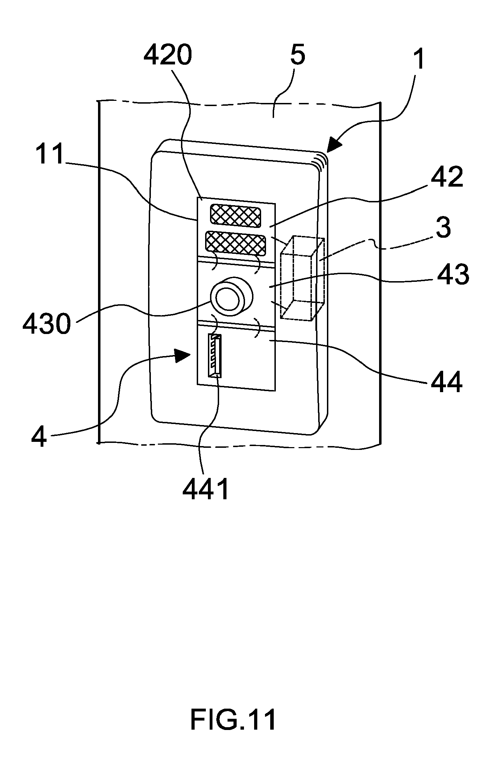

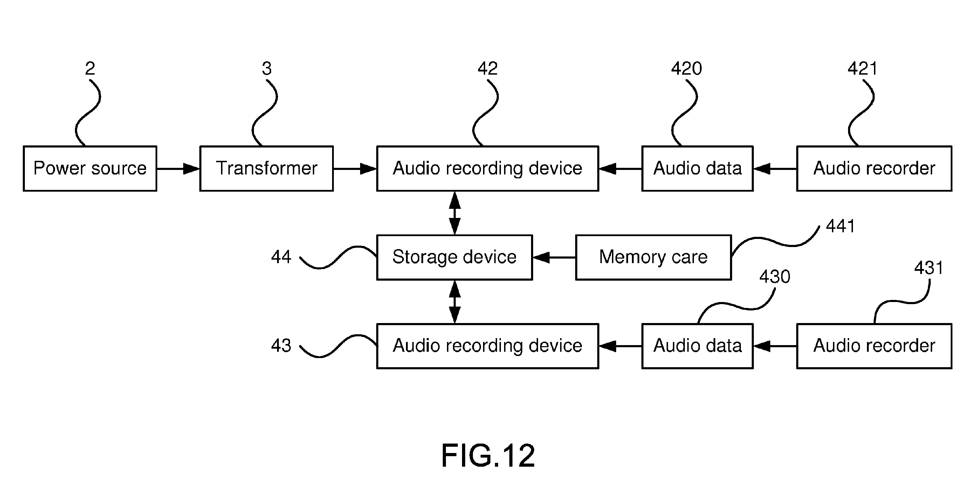

Please refer to FIG.11 and FIG.12, which are a perspective view and a flow view showing a second state of use of the preferred embodiment of the present invention. As shown in the figures, the present invention uses an audio recording device 42 and a video recording device 43, which are set in a hole 11 of a panel 1 on a wall surface 5; and at least one storage device 44 is set coordinately. The audio recording device 42, the video recording device 43 and the storage device 44 are connected serially and one of the three devices is connected with a transformer 3 to obtain power from a power source 2.

In the second state of use, a memory card 441 is inserted into the storage device 44; and the audio recording device 42 and the video recording device 43 obtain audio data 420 and video data 430 by an audio recorder 421 and a video recorder 431 to be stored in the memory card 441 of the storage device 44 so that audio and video data are fetched and stored. When a user wants to play the audio and video data, the memory card 441 is released from the storage device 44 and is inserted into a card reader (not shown in the figures) so that the audio and video data are read to be played by a media player.

To sum up, the present invention is a multimedia module in a switch case, where an electronic device comprises one electronic component or a plurality of electronic components to be set in a hole of a panel of a switch case so that variety and flexibility are obtained.

The embodiment herein disclosed is not intended to unnecessarily limit the scope of the invention. Therefore, simple modifications or variations belonging to the equivalent of the scope of the claims and the instructions disclosed herein for a patent are all within the scope of the present invention.

## Claims

1. Multimedia module in a switch case, comprising:
a panel (1) to be located on a wall surface (5), said panel having at least one hole (11);
a power source (2) located between said panel (1) and said wall surface (5);
a transformer (3) connecting to said power source (2); and
an electronic device (4) arranged in said hole (11) of said panel (1), said electronic device (4) having a connection hole (40) to connect to said transformer (3).

2. Module according to claim 1, wherein said power source (2) provides an alternating current having a voltage between 110 volts and 220 volts.

3. Module according to claim 1 or 2, wherein said transformer (3) transforms an alternating current into a direct current.

4. Module according to one of claims 1 to 3, wherein said electronic device (4) is an MP3 module comprising a storage unit, a control unit, a display unit, an output unit and a connection unit.

5. Module according to one of claims 1 to 3, wherein said electronic device (4) is an audio recording device having an audio recorder.

6. Module according to one of claims 1 to 3, wherein said electronic device (4) is a video recording device having a video recorder.

7. Module according to one of claims 1 to 3, wherein said electronic device (4) is a storage device to be inserted with a memory card.

8. Module according to one of claims 1 to 3, wherein said electronic device (4) is an antenna device having a wireless transmission unit.

9. Module according to one of claims 1 to 3, wherein said electronic device (4) comprises a plurality of electronic components.
